# EUROPÄISCHE PATENTANMELDUNG

(11) **EP 1 308 224 A2**
(43) Veröffentlichungstag der Anmeldung: **07.05.2003**
(21) Anmeldenummer: 02405908.1
(22) Anmeldetag: 23.10.2002
(51) Int. Cl.: B21D 26/02, B21D 28/24, B23D 21/00

(54) **Verfahren und Vorrichtung zum Formen und/oder Beschneiden eines Hohlkörpers aus einem Hohlprofil od. dgl. Werkstück**

(30) Priorität: 31.10.2001 DE 10153224
(71) Anmelder: Alcan Technology & Management AG, 8212 Neuhausen am Rheinfall (CH)
(72) Erfinder: Göger, Aslan, 21439 Marxen (DE); Rost, André, 78224 Singen (DE)

(57) **Zusammenfassung**

Bei einer Vorrichtung zum Formen und/oder Beschneiden eines Hohlkörpers aus einem -- insbesondere aus einer Leichtmetalllegierung geformten -- Hohlprofil (20) od.dgl. Werkstück mittels eines strömbaren Wirkmediums auf dem Weg des Hydroformens in einem Werkzeug (10) ist in einem Rohrraum (12) des Werkzeuges (10) am Rohrraumumfang eine Schneidkante (18) od.dgl. Formeinrichtung angebracht und dieser ein an einem axial im Rohrraum (12) bewegbaren Stempel (30) vorgesehener, in den Hohlkörper (20) eingreifender Stempelansatz (34) zugeordnet; der Stempel (30) ist mit zumindest einem Zuführkanal (32) für das Wirkmedium versehen und dieser innenseitig zu einem begrenzt elastisch verformbar ausgebildeten Werkzeugteil (60) geführt, wobei die Schneidkante/n (18) an einem den Rohrraum (12) umgebenden Ring- oder Rinnenraum (14) angeordnet sein kann/können. Diese Vorrichtung wird vor allem für ein Verfahren eingesetzt, bei dem das Hohlprofil (20) in den Rohrraum (12) eines Werkzeugeinsatzes (10) eingeführt und die beiden Endbereiche des Hohlprofils (20) abgedichtet werden, wonach der eine der Endbereiche zumindest partiell durch das Wirkmedium sowie einen im Hohlkörper (20) angeordneten, begrenzt elastisch ausgebildeten und vom Wirkmedium beaufschlagten Werkzeugteil (60) radial an wenigstens eine Schneidkante (18) od.dgl. Formeinrichtung des den Hohlkörper (20) umfangenden Werkzeuges (10) herangeführt sowie an dieser die Wandung (22) des Hohlprofils (20) durch radialen Druck geschnitten oder verformt wird.

## Beschreibung

Die Erfindung betrifft ein Verfahren zum Formen und/oder Beschneiden eines Hohlkörpers aus einem -- insbesondere aus einer Leichtmetalllegierung geformten -- Hohlprofil od. dgl. Werkstück mittels eines strömbaren Wirkmediums auf dem Wege des Hydroformens. Zudem erfasst die Erfindung eine Vorrichtung zur Durchführung eines solchen Verfahrens.

Beim sog. Innenhochdruck-Umformen (IHU-Verfahren) wird ein Hohlprofil durch Innendruck ausgedehnt. Zusätzlich kann das Hohlprofil mittels wenigstens eines am Werkstück angreifenden Stempels nachgeschoben sowie aufgeweitet, gestaucht bzw. expandiert werden.

Das Innenhochdruck-Umformen oder Hydroformen findet mehr und mehr Eingang als wirtschaftliches Herstellungsverfahren. Als Ausgangsmaterial werden dabei vorwiegend Stahlrohre eingesetzt. Die Endkontur der durch Aufweitung zu formenden Bauteile ist im allgemeinen um ein Vielfaches komplexer als der einfache Kreisquerschnitt des Ausgangsmaterials.

Beispielsweise beschreibt die DE 35 32 499 C1 eine Vorrichtung zum hydraulischen Aufweiten eines Rohrabschnitts mittels einer in das Rohr einführbaren zapfenartigen zylindrischen Sonde, die dank mindestens zweier im Abstand voneinander befindlicher Dichtringe mit dem aufzuweitenden Rohrabschnitt einen Ringraum bildet, der zum Aufweiten mit Druckmittel gefüllt wird; die beiden Dichtringe sind jeweils in einer ringförmigen Aufnahmenut U-förmigen Querschnitts in der Sonde angeordnet und haben im Ausgangszustand beim Einführen der Sonde in das Rohr einen höchstens dem Außendurchmesser der Sonde entsprechenden Außendurchmesser. Vor Beginn des Aufweitungsvorganges werden sie zum Abdichten des Ringspaltes zwischen Sonde und Rohr radial mit Druckmittel beaufschlagt, welches den Aufnahmenuten durch eine an die Druckmittelzuführung angeschlossene Verbindungsleitung zugeführt worden ist. Die Druckmittelzufuhr zum Ringraum geschieht ausschließlich über zumindest eine der Aufnahmenuten und wird durch einen als Ventilkörper dienenden Dichtring gesteuert, der eine zwischen Aufnahmenut und Ringraum befindliche Öffnung so lange verschließt, bis er durch elastisches Aufweiten seine Dichtwirkung erreicht hat. Jene Aufnahmenut ist an ihrem dem Ringraum benachbarten Rand mit wenigstens einem schrägen Einschnitt versehen. Wird nun der Druck im Ringraum zwischen den beiden Dichtungen erhöht, beginnt sich die Rohrwand in diesem Bereich zu weiten.

In Kenntnis dieser Gegebenheiten hat sich der Erfinder das Ziel gesetzt, die Möglichkeiten des Einsatzes von Innenhochdruck-Umformprozessen bzw. des Hydroformens zu erweitern und die Herstellung von Schneidgeometrien an Profilquerschnitten unter Verminderung einer nachfolgenden Endbearbeitung auf Bearbeitungsmaschinen zu ermöglichen.

Zur Lösung dieser Aufgabe führt die Lehre des unabhängigen Anspruches, die Unteransprüche geben günstige Weiterbildungen an. Zudem fallen in den Rahmen der Erfindung alle Kombinationen aus zumindest zwei der in der Beschreibung der Zeichnung und/oder den Ansprüchen offenbarten Merkmale.

Erfindungsgemäß wird das Hohlprofil in einen Rohrraum eines Werkzeuges eingeführt, und die beiden Endbereiche des Hohlprofils werden abgedichtet, wonach der eine der Endbereiche zumindest partiell durch das Wirkmedium sowie einen im Hohlkörper angeordneten, begrenzt elastischen und vom Wirkmedium beaufschlagten Werkzeugteil radial an wenigstens eine -- bevorzugt ringartig ausgebildete -- Schneidkante des -- den Hohlkörper umfangenden -- Werkzeuges herangeführt und an diesem die Wandung des Hohlprofils durch radialen Druck geschnitten oder verformt wird. Dazu hat es sich als günstig erwiesen, den einen der beiden Endbereiche des Hohlkörpers durch einen Stempel abzudichten und durch letzteren das Wirkmedium einem in den Hohlkörper eingreifenden Stempelansatz zuzuführen. Dabei wird der den Stempelansatz umgebende und begrenzt elastische Werkzeugteil durch das Wirkmedium zuerst radial aufgeweitet und an die Innenfläche des Hohlprofils herangführt, wonach er -- mit Verformungs- und Schneidkraft -- mit der ihn umgebenden Profilwand an jene Schneidkante gepresst wird; die Profilwand wird -- in Abhängigkeit von den sie beaufschlagenden Kräften -- entweder verformt oder beschnitten.

Nach einem weiteren Merkmal des erfindungsgemäßen Verfahrens soll das Wirkmedium sowohl dem begrenzt elastischen Werkzeugteil radial zur Längsachse des Werkzeuges zugeführt werden, als auch in Richtung dieser Längsachse dem -andernends abgedichteten -- Profilinnenraum.

Im Rahmen der Erfindung liegt eine Vorrichtung zum Formen und/oder Beschneiden eines Hohlkörpers aus einem Hohlprofil od.dgl. Werkstück mittels eines strömbaren Wirkmediums auf dem Weg des Hydroformens, bei der in einem Rohrraum des Werkzeuges am Rohrraumumfang eine Schneidkante od.dgl. Formeinrichtung -- etwa radial -- angebracht und dieser ein an einem axial im Rohrraum bewegbaren Stempel vorgesehener, in den Hohlkörper eingreifender Stempelansatz vorgesetzt ist; der Stempel ist mit zumindest einem Zuführkanal für das Wirkmedium versehen und letzterer innenseitig an den -oben erwähnten -- begrenzt elastisch verformbar ausgebildeten Werkzeugteil angeschlossen.

Als günstig hat es sich erwiesen, die Schneidkante/n an einen den Rohrraum umgebenden, in das Werkzeug eingeformten Ring- oder Rinnenraum anzuordnen, insbesondere diese Schneidkante als Ring auszubilden.

Der Werkzeugteil soll bevorzugt aus einem Kunststoff -insbesondere einem Polyurethan -- ringartig ausgebildet sein; dieser Ring umläuft einen Abschnitt des Stempelansatzes manschettenartig. Zudem soll der den Werkzeugteil aufnehmende Abschnitt des Stempelansatzes an seiner Außenfläche mit -- in der Umfangsfläche schraubenlinienartig geführten -- Strömungsnuten für das Wirkmedium versehen sein; zwischen dieser Außenfläche und der Innenfläche seiner Manschette findet sich ein Strömungsraum, in dem sich das Wirkmedium gleichmäßig zu verteilen vermag.

Als günstig hat sich ergeben, dass der Stempelansatz eine an die Stempelstirn anschlagbare Fußscheibe mit axial anschließendem Rohrabschnitt aufweist, dessen Durchmesser geringer ist als der Durchmesser der Fußscheibe einerseits und eines andernends angefügten Kopfstückes. Zudem soll der Rohrabschnitt eine beidends von Fußscheibe und Kopfstück begrenzten Aufnahmeraum für den elastischen Werkzeugteil enthalten.

Nach einem weiteren Merkmal der Erfindung entspricht der Durchmesser des Kopfstückes etwa dem Außendurchmesser des begrenzt elastischen Werkzeugteils in Ruhestellung.

Des guten Zusammenbaues halber sollen die Teile des Stempelansatzes durch eine Axialschraube verbunden sein, wobei letztere mit dem Spiel verschraubt ist. Als günstig hat es sich erwiesen, diese Axialschraube mit einem durchgehenden Axialkanal zu versehen, der in die axiale Bohrung des Stempels mündet. Des weiteren ist zumindest ein achsparalleler, in radialem Abstand zur Längsachse verlaufender Strömungskanal zwischen der/den Nut/en des Rohrabschnittes einerseits und der axialen Füllbohrung des Stempels anderseits vorgesehen, der die Beaufschlagung des Manschettenelements ermöglicht.

Die Erfindung bewirkt dank der umlaufenden Schneidkante am Werkzeug einen problemlosen Endenbeschnitt des Hohlprofils, und es werden komplexe Schneidgeometrien an verschiedenen Profilquerschnitten während des Umformprozesses ermöglicht mit dem Vorteil, auf eine nachfolgende Endenbearbeitung auf Bearbeitungsmaschinen gegebenenfalls verzichten zu können.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
- Fig. 1:: einen Längsschnitt durch einen Teil eines Werkzeuges zum Behandeln eines Hohlprofils auf dem Wege des IHU-Umformens;
- Fig. 2:: einen vergrößerten Ausschnitt aus Fig. 1;
- Fig. 3:: ein Detail aus Fig. 2 in anderer Darstellung.

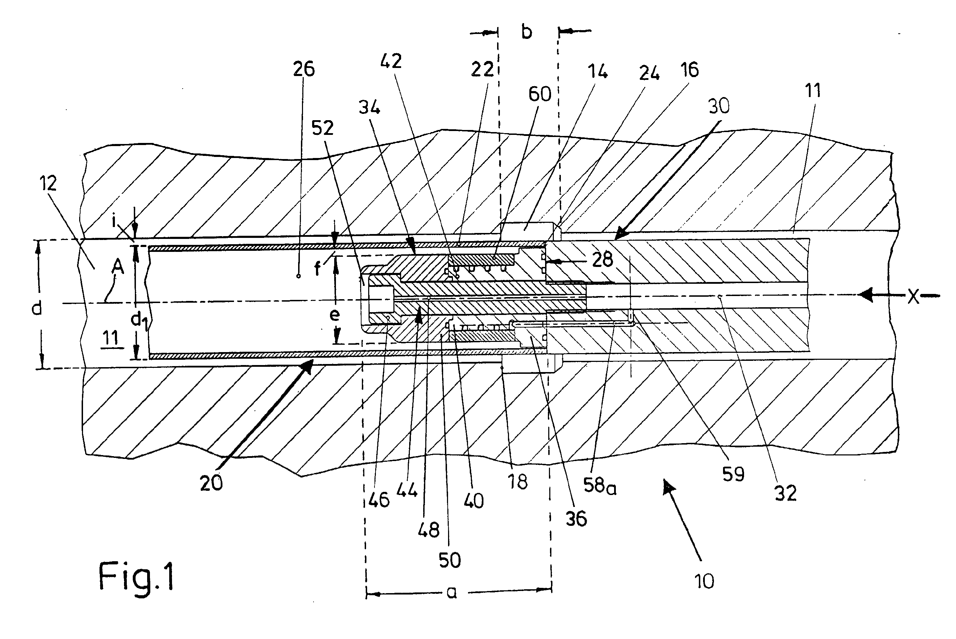

In der Längsachse A eines bei 10 angedeuteten Werkzeugeinsatzes ist dieser mit einem koaxialen Durchgangs- oder Rohrraum 12 eines Durchmessers d versehen. Etwa in Längsmitte der Fig. 1 geht vom Rohrraum 12 des Werkzeugeinsatzes 10 radial ein kragen- oder ringartiger Rinnenraum 14 der Breite b aus, dessen in Fig. 1 rechte Seite mit einem zur Längsachse A hin geneigten Wandbereich 16 ausgestattet ist; die gegenüberliegende Kante des Ring- oder Rinnenraumes 14 dient als Schneidkante bzw. als Schneidmesser 18.

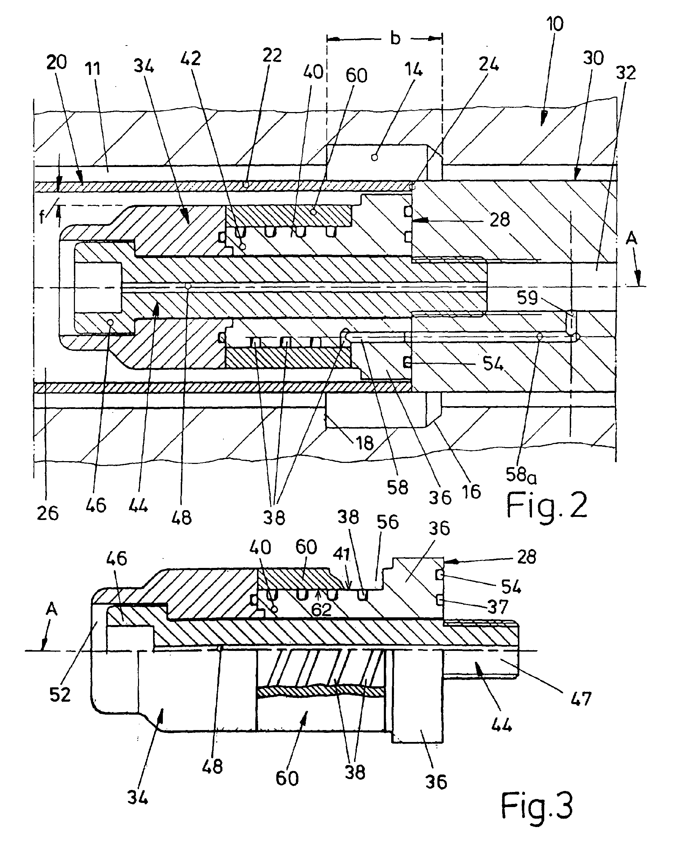

Im Bereich des Rinnenraums 14 endet ein in den Rohrraum 12 eingeführtes Hohlprofil 20 eines äußeren Durchmessers d₁ seiner Profilwandung 22, dessen nicht erkennbares -- in Fig. 1 linkes -- Endstück durch einen Stempel od.dgl. Werkzeug abgedichtet ist. Die Stirnkante 24 der Profilwandung 22 schlägt an die Stirnfläche 28 eines zylindrischen Stahlstempels 30 mit axialer Bohrung 32 an; der Profilinnenraum 26 wird endwärts durch den stirnseitig anliegenden Stahlstempel 30 abgedichtet. In den Profilinnenraum 26 ragt ein an die Stirnfläche 28 des Stahlstempels 30 axial angesetzter Stempelansatz 34 der axialen Länge a von etwa 75 mm mit einem im Längsschnitt gestuften Anschlagkörper 42, der eine der Stempelstirn 28 anlegbare, also stempelnahe Fußscheibe 36 sowie einen -mit einer insbesondere in Fig. 2, 3 verdeutlichten, in Draufsicht schraubenförmigen Nut 38 ausgestatteten --Rohrabschnitt 40 umfasst und an den mittels einer Axialschraube 44 ein etwa zylindrisches Kopfstück 50 eines gegenüber jenem Rohrabschnitt 40 größeren Durchmessers e von etwa 40 mm angefügt ist. Dieses wird von dem in eine stirnwärtige Mulde 52 des Kopfstückes 50 eingreifenden Schraubenkopf 46 axial an den Anschlagkörper 42 gepresst; in jene Mulde 52 mündet im übrigen ein Axialkanal 48 der Axialschraube 44.

Die mit Ringnuten 37 für bei 54 nur angedeutete Dichtungen versehene und vom Schraubende 47 der Axialschraube 44 durchgriffene Fußscheibe 36 des Anschlagkörpers 42 und das Kopfstück 50 begrenzen einen - vor allem in Fig. 3 erkennbaren -- ringförmigen Raum 56, der einen Manschettenring 60 aus Polyurethan aufnimmt. Dieser deckt in der dargestellten Betriebsstellung die in Draufsicht schraubenförmige Nut 38 ab, deren der Fußscheibe 36 des Anschlagkörpers 42 nahes Ende an einen achsparallelen Strömungskanal 58 der Fußscheibe 52 angeschlossen ist, der sich als Kanal 58ₐ im Stahlstempel 34 fortsetzt und dort dank eines andernends vorgesehenen Radialabschnitts 59 als Bypass mit der axialen Füllbohrung 32 des Stahlstempels 30 in Verbindung steht.

Der Stahlstempel 30 führt durch jene axiale Füllbohrung 32 dem Profilinnenraum 26 in Pfeilrichtung x ein flüssiges Hochdruckmedium zu. Durch das anströmende Hochdruckmedium wird der Manschettenring 60 radial gedehnt und mit ihm auch die Wandung 22 des Hohlprofils 20; das dem Manschettenring 60 zugeordnete Profilende wird dabei der Schneidkante bzw. dem Schneidmesser 18 des Werkzeugeinsatzes 10 zugeführt und entweder abgeschnitten oder so verformt, dass komplexe Schneidgeometrien entstehen.

Aus Gründen besserer Übersichtlichkeit ist der lichte Abstand f zwischen dem Manschettenring 60 und der Profilwandung 22 sowie der lichte Abstand i zwischen letzterer und der Innenfläche 11 des Rohrraumes 12 überhöht dargestellt; deren Maße sind so gewählt, dass der Manschettenring 60 während des beschriebenen Verformungs- bzw. Schneidvorganges seinen Ringraum 56 nicht verläßt.

## Patentansprüche

1. Verfahren zum Formen und/oder Beschneiden eines Hohlkörpers aus einem insbesondere aus einer Leichtmetalllegierung geformten Hohlprofil (20) od.dgl. Werkstück mittels eines strömbaren Wirkmediums auf dem Wege des Hydroformens in einem Werkzeug (10),
**dadurch gekennzeichnet,**
**dass** das Hohlprofil (20) in einen Rohrraum (12) eines Werkzeugeinsatzes (10) eingeführt und die beiden Endbereiche des Hohlprofils (20) abgedichtet werden, wonach der eine der Endbereiche zumindest partiell durch das Wirkmedium sowie einen im Hohlkörper (20) angeordneten, begrenzt elastisch ausgebildeten und vom Wirkmedium beaufschlagten Werkzeugteil (60) radial an wenigstens eine Schneidkante (18) od.dgl. Formeinrichtung des den Hohlkörper (20) umfangenden Werkzeuges (10) herangeführt sowie an dieser die Wandung (22) des Hohlprofils (20) durch radialen Druck geschnitten oder verformt wird.

2. Verfahren nach Anspruch 1, **dadurch gekennzeichnet, dass** der eine Endbereich des Hohlkörpers (20) durch einen Stempel (30) abgedichtet und durch diesen das Wirkmedium einem in den Hohlkörper eingreifenden Stempelansatz (34) zugeführt wird, wobei der den Stempelansatz umgebende manschettenartig ausgebildete, begrenzt elastische Werkzeugteil (60) durch das Wirkmedium radial aufgeweitet wird.

3. Verfahren nach Anspruch 1 oder 2, **dadurch gekennzeichnet, dass** der begrenzt elastische Werkzeugteil (60) durch das Wirkmedium zuerst radial an die Innenfläche des Hohlprofils (20) herangeführt und dann unter Verformung letzterer mit dieser an die Schneidkante (18) gedrückt wird.

4. Verfahren nach einem der Ansprüche 1 bis 3, **dadurch gekennzeichnet, dass** das Wirkmedium sowohl dem begrenzt elastischen Werkzeugteil (60) radial zur Längsachse (A) des Werkzeuges (10) als auch in Richtung dieser Längsachse dem Profilinnenraum (26) zugeführt wird.

5. Vorrichtung zum Formen und/oder Beschneiden eines Hohlkörpers aus einem insbesondere aus einer Leichtmetalllegierung geformten Hohlprofil (20) od.dgl. Werkstück mittels eines strömbaren Wirkmediums auf dem Weg des Hydroformens in einem Werkzeug (10), insbesondere unter Einsatz des Verfahrens nach wenigstens einem der voraufgehenden Patentansprüche, **dadurch gekennzeichnet, dass** in einem Rohrraum (12) des Werkzeuges (10) am Rohrraumumfang eine Schneidkante (18) od.dgl. Formeinrichtung angebracht und dieser ein an einem axial im Rohrraum (12) bewegbaren Stempel (30) vorgesehener, in den Hohlkörper (20) eingreifender Stempelansatz (34) zugeordnet ist, wobei der Stempel (30) mit zumindest einem Zuführkanal (32) für das Wirkmedium versehen und dieser innenseitig zu einem begrenzt elastisch verformbar ausgebildeten Werkzeugteil (60) angeschlossen ist.

6. Vorrichtung nach Anspruch 5, **dadurch gekennzeichnet, dass** die Schneidkante/n (18) an einem den Rohrraum (12) umgebenden Ring- oder Rinnenraum (14) angeordnet ist/sind.

7. Vorrichtung nach Anspruch 5 oder 6, **dadurch gekennzeichnet, dass** die Schneidkante (18) am Umfang des Rohrraums (12) als Ring ausgebildet ist.

8. Vorrichtung nach einem der Ansprüche 5 bis 7, **dadurch gekennzeichnet, dass** der Werkzeugteil (60) aus einem Kunststoff, insbesondere aus Polyurethan, ringartig ausgebildet ist und einen Abschnitt (56) des Stempelansatzes (34) manschettenartig umfängt.

9. Vorrichtung nach einem der Ansprüche 5 bis 8, **dadurch gekennzeichnet, dass** der den begrenzt elastischen Werkzeugteil (60) aufnehmende Abschnitt (56) des Stempelansatzes (34) an seiner Außenfläche mit Strömungsnuten (37) für das Wirkmedium versehen ist.

10. Vorrichtung nach Anspruch 9, **gekennzeichnet durch** eine in die Umfangsfläche als Schraubenlinie eingeformte Strömungsnut (37).

11. Vorrichtung nach einem der Ansprüche 5 bis 10, **dadurch gekennzeichnet, dass** der Stempelansatz (34) eine an die Stempelstirn (28) anschlagbare Fußscheibe (36) mit axial anschließendem Rohrabschnitt (40) aufweist, dessen Durchmesser geringer ist als der Durchmesser der Fußscheibe einerseits und eines andernends angefügten Kopfstückes (50).

12. Vorrichtung nach Anspruch 11, **dadurch gekennzeichnet, dass** der Rohrabschnitt (40) eine beidends von Fußscheibe (36) und Kopfstück (50) begrenzten Aufnahmeraum (56) für den elastischen Werkzeugteil (60) enthält.

13. Vorrichtung nach einem der Ansprüche 5 bis 12, **dadurch gekennzeichnet, dass** der Durchmesser (e) des Kopfstückes (50) etwa dem Außendurchmesser des begrenzt elastischen Werkzeugteils (60) in Ruhestellung entspricht.

14. Vorrichtung nach einem der Ansprüche 5 bis 13, **dadurch gekennzeichnet, dass** die Teile (36, 40; 50) des Stempelansatzes (34) durch eine Axialschraube (44) verbunden sind und letztere mit dem Stempel (30) verschraubt ist.

15. Vorrichtung nach Anspruch 14, **dadurch gekennzeichnet, dass** die Axialschraube (44) mit einem durchgehenden Axialkanal (48) versehen ist, der in die axiale Bohrung (32) des Stempels (30) mündet.

16. Vorrichtung nach einem der Ansprüche 5 bis 15, **gekennzeichnet durch** zumindest einen achsparallelen, in radialem Abstand zur Längsachse (A) verlaufenden Strömungskanal (48, 48ₐ, 59) zwischen der/den Nut/en (38) des Rohrabschnittes (40) einerseits und der axialen Füllbohrung (32) des Stempels (30) anderseits.

17. Vorrichtung nach einem der Ansprüche 1 bis 16, **gekennzeichnet durch** wenigstens ein weiteres in Beschreibung und/oder Zeichnung offenbartes Merkmal allein oder in Kombination.
